# EUROPEAN PATENT SPECIFICATION

(11) **EP 3 011 251 B1**
(45) Date of publication and mention of the grant of the patent: **17.07.2019**
(21) Application number: 14710948.2
(22) Date of filing: 10.03.2014
(51) Int. Cl.: F28D 21/00

(54) **IMPROVEMENTS IN WASTE HEAT RECOVERY UNITS**
VERBESSERUNGEN AN ABWÄRMERÜCKGEWINNUNGSEINHEITEN
AMÉLIORATIONS DANS DES UNITÉS DE RÉCUPÉRATION DE DÉPERDITION DE CHALEUR

(30) Priority: 20.06.2013 GB 201311013
(43) Date of publication of application: 27.04.2016
(73) Proprietor: Boustead International Heaters Limited, Albert Drive, Burgess Hill RH15 9TN (GB)
(72) Inventor: CHAMPNEYS, David, Albert Drive Burgess Hill RH15 9TN (GB)
(74) Representative: Boult Wade Tennant LLP
(86) International application number: PCT/GB2014/050706
(87) International publication number: WO 2014/202942

(56) References cited:
- EP-A1- 2 208 874
- WO-A1-2007/084011
- DE-A1- 2 733 931
- DE-A1-102006 037 773
- DE-U1- 20 106 186
- US-A- 4 669 530
- US-A- 5 735 680
- US-A1- 2005 133 202

## Description

The present invention relates to waste heat recovery units (WHRUs). In particular, the present invention relates to waste heat recovery units as defined in the preamble of claim 1, and as disclosed in figure 6 of DE 27 33 931 A1.

Gas turbines are commonly used in oil and gas facilities, both onshore and offshore, to provide shaft power to drive compressors or other machinery and for power generation. The gas turbine exhaust consists of a large quantity of hot gas, typically in the range of 450-600°C. Such oil/gas facilities typically also require heat for other parts of the process.

Therefore heat can be recovered from the gas turbine exhaust by means of a waste heat recovery unit, which is a heat exchanger using heat from the exhaust gasses to heat a stream of water, oil or other fluid.

A WHRU essentially consists of a heat exchanger with an array of tubing through which a stream of fluid to be heated is circulated. Exhaust gases from the gas turbine are passed around the exterior of the tubing thereby transferring heat to the fluid stream within the tubing.

It is desirable to reduce the size and weight of WHRUs, especially for offshore applications. This can be achieved by maximising the heat transfer co-efficients, thus minimising the size and weight of the tube bank. It is also desirable to recover the maximum possible amount of heat to reduce the need to satisfy additional heat requirements by burning fossil fuels.

The present invention provides a waste heat recovery unit according to claim 1.

In this way, a more compact arrangement is provided which is easier to manufacture and maintain and requires a smaller space envelope.

Preferably, this actuator is operable to rotate the blades simultaneously and in opposite directions, whereby the blades are rotated towards one another to close the inlet to the bypass channel and are rotated away from another to close the inlets to the heat exchanger channels.

Preferably, the cross section of each channel is substantially rectangular.

In one embodiment, each heat exchanger comprises an array of tubing for circulating fluid to be heated, the tubing supported by a support structure and extending across the respective heat exchanger channel, wherein a portion of the array extends through the support structure such that a plurality of tubing portions are located outside the main flow channel, the tubing portions arranged adjacent to and spaced from one another, and further comprising a plurality of baffles each located between adjacent tubing portions to at least partially fill the space in between them.

Preferably, the tubing comprises a portion of finned larger outer diameter extending across the duct and through the support structure, and a portion of smaller outer diameter located external to the support structure, such that a smaller spacing is provided between adjacent larger outer diameter tubing portions, and a larger spacing is provided between adjacent smaller outer diameter tubing portions, and wherein the baffles are provided in a larger spacing.

Each baffle may comprise a rigid plate within an outer insulating blanket. By way of example, the rigid plate may be formed of metal and the blanket of ceramic or body soluble fibres.

Preferably, the damper system comprises a plurality of rotatable blades, each blade comprising an upstream plate spaced from a downstream plate, and means to supply pressurised gas into the spacing between the upstream and downstream plates, wherein a plurality of apertures are formed in at least some of the downstream plates to allow leakage of pressurised gas.

The invention will now be described in detail by way of example only and with reference to the accompanying drawings in which:
Figure 1 is a schematic illustration of a conventional waste heat recovery unit;
Figure 2 is a schematic illustration of a conventional WHRU with an integral bypass duct;
Figure 3 is a schematic illustration of a conventional WHRU with a separate bypass duct;
Figure 4 is a schematic perspective view of a central bypass configuration WHRU in accordance with the present invention;
Figure 5 is a cross section of Figure 5 along the line AA;
Figure 6 is an enlarged detail view of a baffle plate system for use with the present invention;
Figure 7 is a schematic illustration of a WHRU damper blade for use with the present invention.

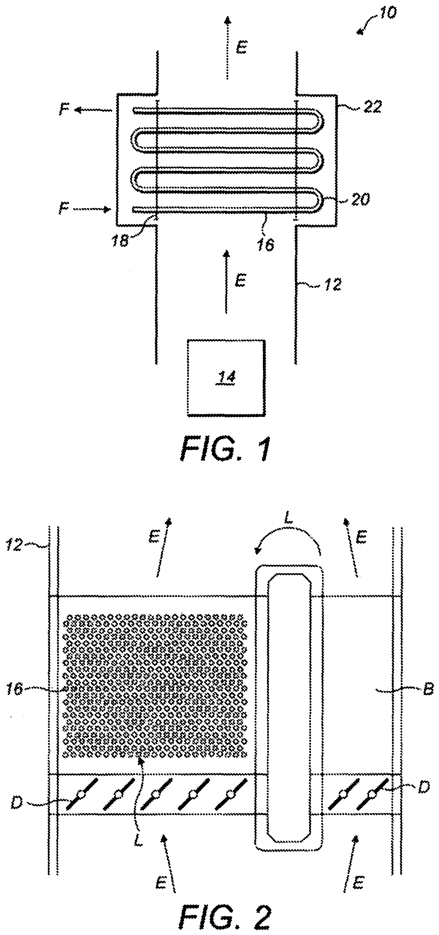

A typical conventional WHRU configuration is shown schematically in Figure 1. The WHRU 10 comprises a duct 12 for carrying hot exhaust gases (indicated by arrows E) from a gas turbine 14 to an array of heat exchanger tubing 16. For clarity, a single length of tubing 16 is shown. In practice, a plurality of such tubes are provided and may be referred to as a bundle or coil. As shown, the tubing 16 passes across the duct 12 multiple times with 180° turns at each side. The tubing 16 is supported on each side, and sometimes at intermediate points, by tube sheets 18. The 180° return bends 20 of the tubing 16 are located in header boxes 22 on the exterior side of the tube sheets 18, out of the main flow channel. The fluid to be heated is circulated through the tubing 16, usually in a counter current configuration, entering at the upper end of the WHRU 10 and exiting at the lower end as shown by the arrows F in Figure 1.

In oil and gas facilities utilising WHRUs, the required amount of heat can vary with plant requirements and feed stock changes over the lifespan of the equipment. In addition, the flow and temperature of the hot gas from the gas turbine may vary with ambient conditions and machine loading. Current practice is to design the WHRU for the worst case combination of gas turbine exhaust conditions and heat demand. However, this means that for most of the time surplus heat is available. Current systems control this by bypassing a portion of the gas turbine exhaust flow around the heat exchange tubing array.

One popular configuration uses an integral bypass arrangement as shown schematically in Figure 2. This arrangement consists of a bypass duct B in parallel with the duct 12 containing the heat exchanger tubing 16, creating two parallel streams for the exhaust gas. Each of the ducts 12, B is provided with a damper system D to selectively open and close the ducts. The damper systems are typically mechanically linked to each other so that as one opens the other closes. This enables the flow of hot gas to the tubing 16 to be controlled.

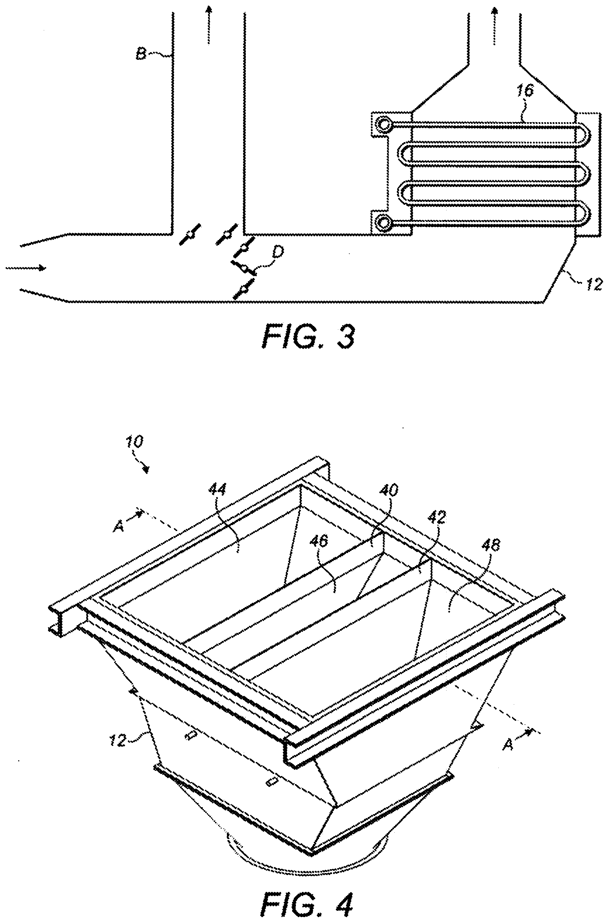

However, there are a number of disadvantages with this arrangement. It is necessary to have some space between the two parallel channels and this increases the overall space requirement for the unit. Indeed, in some configurations, as shown in Figure 3, the bypass duct B is entirely separate and is set at a much greater distance from the duct 12 including the WHRU tubing 16, to avoid leakage of heat from the bypass duct to the tubing 16. However, this further increases the space requirement for the whole unit. In addition, the walls of the bypass duct B are typically made of steel and the weight of the unit is thus increased, which is disadvantageous in offshore of applications. The isolation damper for the WHRU section of the duct 12 is large and this adds to the overall cost of the unit. The tubing 16 of the WHRU is a single item of significant weight and this may even exceed crane capacity of the offshore facility.

Another solution is known as the "CIBAS" design. This uses a central bypass channel concentric with and surrounded by an annular heat exchange duct containing an annular array of tubing. This has some advantages over the system mentioned above in that there is no gap between the separate ducts for the heat exchange tubing and for the bypass flow and a large damper system is avoided.

However, this design also has major drawbacks. The tubes of the heat exchanger have to be bent into the annular configuration which adds to the cost of manufacture and creates integrity risks. The annular arrangement means that welds in the construction are not accessible and individual tubes cannot be removed for maintenance. In addition, the overall circular design does not take advantage of the corners of an available plot of space on a facility.

The present invention provides an alternative configuration in order to address these issues. As shown in Figure 4 the WHRU 10 again comprises a duct 12 for the flow of hot exhaust gas from the gas turbine. At the inlet to the WHRU section the duct 12 may be of circular cross section as shown, or rectangular or any other convenient shape, but the cross section of the WHRU itself is generally square or rectangular. Two dividing walls 40, 42 separate the duct 12 into three adjacent parallel channels 44, 46, 48 of generally rectangular or square cross section.

The outer channels 44, 48 each contain an array of heat exchange tubing although this is not shown in Figure 4 for clarity. This may be arranged in any conventional manner. It may include the baffle plate system described further below.

The central channel 46 does not include any heat exchange tubing and provides a bypass duct.

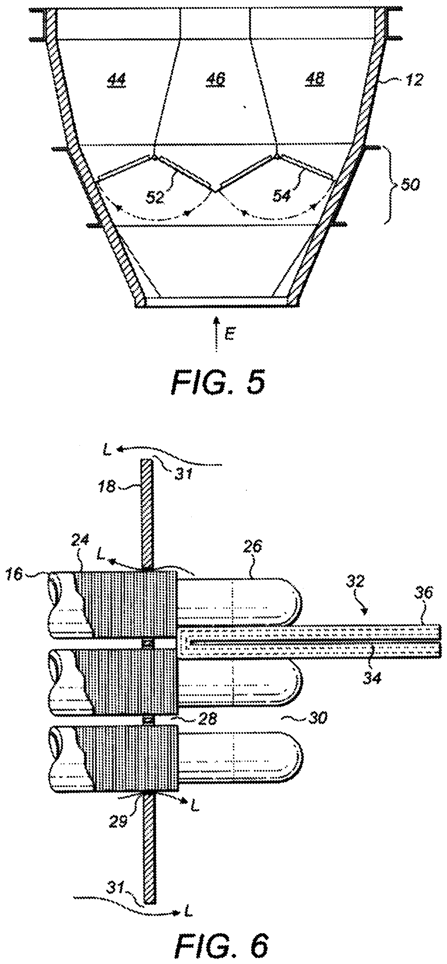

As shown in Figure 5, a damper system 50 controls the flow of exhaust gas and determines which ducts it will pass through. The damper system 50 typically comprises a pair of damper blades 52, 54 which are rotatably mounted at the lower extremity of the dividing walls 40, 42.

Rotation of the damper blades 52, 54 is controlled by a common actuator so that the blades 52, 54 will rotate in unison but in opposite directions. Thus, to pass hot gas through the two heat exchanger arrays in the outer channels 44, 48, one damper blade 52 is rotated anticlockwise and the other damper blade 54 is rotated clockwise so that they move towards each other and together they close the entrance to the bypass channel 46.

In order to close the heat exchanger channels 44, 48 the actuator rotates the damper blade 52 clockwise and the other damper blade 54 anticlockwise in order to open the bypass channel 46 and close the heat exchanger channels 44, 48, The damper blades 52, 54 may also be positioned at an intermediate point so that some flow passes through the heat exchanger channels 44, 48 and some through the bypass channel 46.

Thus, a WHRU including a bypass duct is provided in a compact arrangement which is more straightforward to manufacture and maintain and has a reduced space requirement than the previous configurations.

In the construction of a WHRU. whether of a conventional configuration or the central bypass configuration described above, the tubing 16 and tube sheets 18 require space to expand as they heat up in the flow of exhaust gas. Therefore, clearances must be left in the structure and it is not possible to completely seal all the gaps between the tubing 16 and the tube sheets 18. Consequently, some exhaust gases will escape through such gaps and bypass the main flow channel containing the majority of the array of tubing 16.

To compensate for the losses caused by such bypass flow. conventional systems may be made larger and heavier to maintain a desired heat transfer performance. However, this conflicts with the general desire to reduce size and weight of the WHRU.

In a further feature of the present invention a baffle system to restrict such bypass flow of hot gas may be provided. As shown in Figure 6, the portion 24 of the tubing 16 within the main flow channel of the duct 20 and between the tube sheets 18 has an enlarged outer diameter and increased surface area. Typically this is created by forming a helical fin which is welded to the exterior of the tubing 16 to provide a larger surface area for heat transfer. In a conventional system, the parts of the tubing 16 which are within the header box 22 and are external to the tube sheets 18 and the main flow channel, include some of the portion 24 with the fin, and also a reduced outer diameter portion 26, without the fin, for forming the return bends 20. Accordingly, a small gap 28 is left between adjacent parts of the larger diameter portion 24 of the tubing 16, where the fin is present. A larger gap 30 is left between adjacent parts of the smaller diameter portion 26 of the tubing 16, where no fin is present.

Furthermore, there is a gap 29 between the tube sheet 18 and the larger diameter portion 24 of the tubing 16 which includes the fin. This gap 29 is necessary for contruction and to allow for thermal expansion, but it creates a leakage path indicated by arrows L which can reduce the performance of the heat exchanger as hot gasses bypass the main flow channel and the main body of the tubing 16. In addition, the tube sheet 18 is normally not integral with the wall of the duct 12 and there are further gaps 31 around the edges of the tube sheet 18, creating a further leakage path also indicated by arrows L.

In the present invention baffle plates 32 are located in the larger gaps 30 between the smaller diameter portions 26 of the tubing 6 in the header box 22. Each baffle plate 32 consists of a rigid inner plate 34, for example a metal plate approximately 3mm in thickness, which is encased in an insulating outer blanket 36, for example a ceramic fibre blanket approximately 25mm thick. The baffle plates 32 block the larger gaps 30 so that the bypass flow of exhaust gas which has entered the header box 22 via gaps 29 and 31, can then only flow past the exterior of the larger diameter finned portion 24 of the tubing 16. Thus, although some bypass flow still occurs, this can be utilised for heat transfer into the fluid within the tubing 16 because it contacts the fin providing the larger surface area.

In this way the heat transfer performance of the WHRU 10 can be maintained despite the bypass flow and without increasing the size and weight of the unit. The baffle plates may be incorporated in a WHRU of conventional design, or the central bypass configuration described above.

A further issue which arises with WHRUs which include a bypass channel is that in order to run the gas turbine, a small flow of heat transfer medium must be maintained through the array of tubing 16 even if substantially all of the exhaust flow is passed through the bypass duct. This is because there may be some leakage of heat back to the heat exchange tubing from the outlet of the bypass flow channel, or heat leakage through the damper system. This heat leakage is indicated by arrows L in Figure 2.

One existing solution is to have an entirely separate bypass duct widely spaced from the duct 12 containing the heat exchange tubing as in Figure 5. However, this solution requires more space for the entire unit, adds weight and creates the need for an additional stack emission point.

Another known solution is to form the damper blades from two parallel plates with a spacing between them. Pressurised air is supplied into the spacing, which can exit at edges of the blade. Thus, an area of increased pressure is provided at the damper, which is a higher pressure that the flow of exhaust gas and serves to further seal the entrance to the WHRU.

However, this is not effective in preventing heat leakage occurring at the downstream end from the bypass duct outlet back to the heat exchanger outlet.

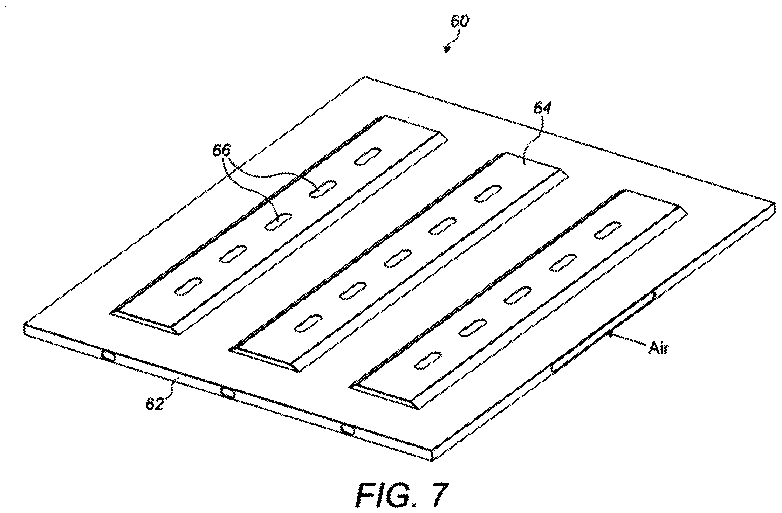

In Figure 7, a damper blade 60 for addressing this problem is illustrated. The damper blade 60 comprises a pair of spaced parallel plates 62, 64. In use, these are arranged with the plate 62 upstream and the plate 64 downstream. Thus, when the damper is closed, exhaust gasses will impinge on the upstream plate 62. A series of apertures 66 is provided in the downstream plate 64. This deliberately allows the pressurised seal air supplied to the interior spacing between the plates 62, 64 to leak out of the downstream plate 64 and into the flow channel of the WHRU.

In this way, the sealing effect is enhanced and the temperature of the heat exchange tubing 1.6 is kept below acceptable limits, even when there is no flow of heat transfer fluid in the tubing 16. This has the advantage of enabling the operator to start or continue to run the gas turbine even if the system which circulates the heat transfer fluid through the tubing 16 is out of service.

This arrangement of perforated damper plates may be incorporated in any conventional WHRU design, or used in conjunction with either or both the baffle plate system and the central bypass configuration as described above.

Thus, the present invention provides an improved waste heat recovery unit which is more efficient than conventional systems. The skilled person will appreciate that various modifications may be made to the precise details described above whilst not departing from the scope of the invention as set out in the following claims.

## Claims

1. A waste heat recovery unit comprising a duct for hot gas, wherein the duct is divided into first, second and third adjacent and parallel channels each with an inlet and an outlet, a heat exchanger is located in each of the first and third channels, and the second channel is located between the first and third channels and provides a bypass channel, and further comprising a damper system operable to selectively open and close the inlets of the first, second and third channels, the unit being **characterized in that** the damper system comprises a plurality of rotatable blades mounted to walls dividing the duct into the first, second and third channels, and connected to a common actuator.

2. A waste heat recovery unit as claimed in claim 1, wherein the actuator is operable to rotate the blades simultaneously and in opposite directions, whereby the blades are rotated towards one another to close the inlet to the bypass channel and are rotated away from one another to close the inlets to the heat exchanger channels.

3. A waste heat recovery unit as claimed in claim 1 or claim 2, wherein the cross-section of each channel is substantially rectangular.

4. A waste heat recovery unit as claimed in any preceding claim, wherein each heat exchanger comprises an array of tubing for circulating fluid to be heated, the tubing supported by a support structure and extending across the respective heat exchanger channel, wherein a portion of the array extends through the support structure such that a plurality of tubing portions are located outside a main flow channel, the tubing portions arranged adjacent to and spaced from one another, and further comprising a plurality of baffles each located between adjacent tubing portions to at least partially fill the spacing therebetween.

5. A waste heat recovery unit as claimed in claim 4, wherein the tubing comprises a portion of larger outer diameter extending across the duct and through the support structure, and a portion of smaller outer diameter located external to the support structure, such that a smaller spacing is provided between adjacent larger outer diameter tubing portions, and a larger spacing is provided between adjacent smaller outer diameter tubing portions, and wherein the baffles are provided in the larger spacings.

6. A waste heat recovery unit as claimed in claim 4 or claim 5, wherein each baffle comprises a rigid plate within an outer insulating blanket.

7. A waste heat recovery unit as claimed in claim 6, wherein the rigid plate is formed of metal and the blanket is formed of ceramic fibres.

8. A waste heat recovery unit as claimed in any preceding claim, wherein the damper system comprises a plurality of rotatable blades, each blade comprising an upstream plate spaced from a downstream plate, and means to supply pressurised gas into the spacing between the upstream and downstream plates, wherein a plurality of apertures are formed in at least some of the downstream plates to allow leakage of pressurised gas.

## Patentansprüche

1. Abwärmerückgewinnungseinheit mit einer Leitung für Heißgas, wobei die Leitung in benachbarte und parallele erste, zweite und dritte Kanäle mit jeweils einem Einlass und einem Auslass unterteilt ist, ein Wärmetauscher jeweils in dem ersten und dem dritten Kanal angeordnet ist und der zweite Kanal zwischen dem ersten und dritten Kanal angeordnet ist und einen Bypasskanal bereitstellt, und ferner mit einem Klappensystem, das zum selektiven Öffnen und Schließen der Einlässe des ersten, zweiten und dritten Kanals betreibbar ist, wobei die Einheit **dadurch gekennzeichnet ist, dass**
das Klappensystem eine Mehrzahl von drehbaren Schaufeln umfasst, die an Wänden montiert sind, die die Leitung in den ersten, zweiten und dritten Kanal teilen, und mit einem gemeinsamen Stellglied verbunden sind.

2. Abwärmerückgewinnungseinheit nach Anspruch 1, bei der das Stellglied betreibbar ist, um die Schaufeln gleichzeitig und in entgegengesetzte Richtungen zu drehen, wobei die Schaufeln aufeinander zu gedreht werden, um den Einlass zum Bypasskanal zu schließen, und voneinander weg gedreht werden, um die Einlässe zu den Wärmetauscherkanälen zu schließen.

3. Abwärmerückgewinnungseinheit nach Anspruch 1 oder Anspruch 2, bei der der Querschnitt jedes Kanals im Wesentlichen rechteckig ist.

4. Abwärmerückgewinnungseinheit nach einem der vorhergehenden Ansprüche, bei der jeder Wärmetauscher eine Anordnung von Rohren zum Zirkulieren des zu erwärmenden Fluids umfasst, wobei die Rohre durch eine Stützstruktur getragen sind und sich quer durch den jeweiligen Wärmetauscherkanal erstrecken, wobei sich ein Abschnitt der Anordnung so durch die Stützstruktur erstreckt, dass eine Mehrzahl von Rohrabschnitten außerhalb eines Hauptströmungskanals angeordnet ist, wobei die Rohrabschnitte benachbart und voneinander beabstandet angeordnet sind, und ferner eine Mehrzahl von Leitblechen umfasst, die jeweils zwischen benachbarten Rohrabschnitten angeordnet sind, um den Zwischenraum dazwischen zumindest teilweise zu füllen.

5. Abwärmerückgewinnungseinheit nach Anspruch 4, bei der das Rohr einen Abschnitt mit größerem Außendurchmesser, der sich quer durch den Kanal und durch die Stützstruktur erstreckt, und einen Abschnitt mit kleinerem Außendurchmesser umfasst, der außerhalb der Stützstruktur angeordnet ist, so dass ein kleinerer Zwischenraum zwischen benachbarten Rohrabschnitten mit größerem Außendurchmesser und ein größerer Zwischenraum zwischen benachbarten Rohrabschnitten mit kleinerem Außendurchmesser vorgesehen ist, und bei dem die Leitbleche in den größeren Zwischenräumen vorgesehen sind.

6. Abwärmerückgewinnungseinheit nach Anspruch 4 oder Anspruch 5, bei der jedes Leitblech eine starre Platte innerhalb einer äußeren isolierenden Hülle umfasst.

7. Abwärmerückgewinnungseinheit nach Anspruch 6, bei der die starre Platte aus Metall und die Hülle aus Keramikfasern gebildet ist.

8. Abwärmerückgewinnungseinheit nach einem der vorhergehenden Ansprüche, bei der das Klappensystem eine Mehrzahl von drehbaren Schaufeln, deren jede eine stromaufwärts angeordnete Platte umfasst, die von einer stromabwärts angeordneten Platte beabstandet ist, und Mittel zum Zuführen von Druckgas in den Zwischenraum zwischen den stromaufwärts und stromabwärts angeordneten Platten umfasst, wobei eine Mehrzahl von Öffnungen in mindestens einigen der stromabwärts angeordneten Platten ausgebildet ist, um das Austreten von Druckgas zu ermöglichen.

## Revendications

1. Unité de récupération de chaleur perdue comprenant un conduit pour gaz chaud, dans laquelle le conduit est divisé en premier, deuxième et troisième canaux adjacents et parallèles, chacun avec une entrée et une sortie, un échangeur de chaleur étant situé dans chacun des premier et troisième canaux, et le deuxième canal étant situé entre les premier et troisième canaux et fournissant un canal de dérivation, et comprenant en outre un système d'amortisseur opérationnel pour ouvrir et fermer de manière sélective les entrées des premier, deuxième et troisième canaux, l'unité étant **caractérisée en ce que** le système d'amortisseur comprend une pluralité de pales rotatives montées sur des parois divisant le conduit en les premier, deuxième et troisième canaux, et connectées à un actionneur commun.

2. Unité de récupération de chaleur perdue selon la revendication 1, dans laquelle l'actionneur est opérationnel pour faire tourner les pales simultanément et dans des directions opposées, de sorte que les pales sont mises en rotation les unes vers les autres pour fermer l'entrée du canal de dérivation et mises en rotation à l'opposé les unes des autres pour fermer les entrées des canaux d'échangeur de chaleur.

3. Unité de récupération de chaleur perdue selon la revendication 1 ou la revendication 2, dans laquelle la section transversale de chaque canal est sensiblement rectangulaire.

4. Unité de récupération de chaleur perdue selon l'une quelconque des revendications précédentes, dans laquelle chaque échangeur de chaleur comprend un réseau de tubulure pour faire circuler le fluide à chauffer, la tubulure étant supportée par une structure de support et s'étendant à travers le canal d'échangeur de chaleur respectif, dans lequel une partie du réseau s'étend à travers la structure de support de telle sorte qu'une pluralité de parties de tubulure sont situées à l'extérieur d'un canal d'écoulement principal, les parties de tubulure étant agencées adjacentes et espacées les unes des autres, et comprenant en outre une pluralité de déflecteurs situés chacun entre des parties de tubulure adjacentes pour remplir au moins partiellement l'espacement entre celles-ci.

5. Unité de récupération de chaleur perdue selon la revendication 4, dans laquelle la tubulure comprend une partie de diamètre extérieur plus grand s'étendant à travers le conduit et à travers la structure de support, et une partie de diamètre extérieur plus petit située à l'extérieur de la structure de support, de sorte qu'un espacement plus petit est prévu entre des parties de tubulure de diamètre extérieur plus grand adjacentes, et qu'un espacement plus grand est prévu entre des parties de tubulure de diamètre extérieur plus petit adjacentes, et dans laquelle les déflecteurs sont fournis dans les espacements plus grands.

6. Unité de récupération de chaleur perdue selon la revendication 4 ou 5, dans laquelle chaque déflecteur comprend une plaque rigide à l'intérieur d'une couverture isolante extérieure.

7. Unité de récupération de chaleur perdue selon la revendication 6, dans laquelle la plaque rigide est formée de métal et la couverture est formée de fibres de céramique.

8. Unité de récupération de chaleur perdue selon l'une quelconque des revendications précédentes, dans laquelle le système d'amortisseur comprend une pluralité de pales rotatives, chaque pale comprenant une plaque amont espacée d'une plaque aval, et des moyens pour amener du gaz comprimé dans l'espacement entre les plaques amont et aval, dans lequel une pluralité d'ouvertures sont formées dans au moins certaines des plaques aval pour permettre une fuite de gaz comprimé.
